# EUROPÄISCHE PATENTSCHRIFT

(11) **EP 1 997 651 B1**
(45) Veröffentlichungstag und Bekanntmachung des Hinweises auf die Patenterteilung: **25.11.2009**
(21) Anmeldenummer: 08153891.0
(22) Anmeldetag: 01.04.2008
(51) Int. Cl.: B60C 11/00

(54) **Fahrzeugluftreifen**
Pneumatic tyres for a vehicle
Pneus de véhicule

(30) Priorität: 30.05.2007 DE 102007025116
(43) Veröffentlichungstag der Anmeldung: 03.12.2008
(73) Patentinhaber: Continental Aktiengesellschaft, 30165 Hannover (DE)
(72) Erfinder: Rodewald, Helmut, 31249 Rötzum (DE); Wiese, Klaus, 30559 Hannover (DE); Heine, Stefan, 30163 Hannover (DE); Wajroch, Mike, 30962 Seelze (DE)
(74) Vertreter: Finger, Karsten

(56) Entgegenhaltungen:
- EP-A- 0 104 133
- EP-A- 0 239 719
- EP-A- 0 780 245
- EP-A- 1 508 457
- EP-A- 1 512 554
- DE-A1- 10 014 892
- JP-A- 2003 104 009

## Beschreibung

Die Erfindung betrifft einen Fahrzeugluftreifen in Radialbauart mit einem Gürtelverband und einem profilierten Laufstreifen mit Profilelementen, wie Profilblöcken oder Rippen, welcher Laufstreifen in radialer Richtung verlaufende Schichten aufweist, welche abwechselnd aus zwei Gummimischungen unterschiedlicher Härte bestehen und von einer Vielzahl fingerartig ineinander greifender Fortsätze gebildet sind, welche von einer Grundschicht eines Laufstreifen-Unterteils in Richtung Laufstreifenperipherie und von einer Außenschicht eines Laufstreifen-Oberteils in Richtung Gürteilverband verlaufen.

Derart ausgeführte Fahrzeugluftreifen sind beispielsweise aus der EP-A-1 508 457 und aus der EP-A-1 512 554 bekannt. Die fingerartig ineinander greifenden Fortsätze weisen einen dreieckförmigen Querschnitt auf, sodass die von der Grundschicht in Richtung Laufstreifenperipherie verlaufenden Fortsätze nahe der Grundschicht ihre größte Breite aufweisen und zu ihren radial äußeren Enden ihre Breite verringern. Diese Fortsätze können bis zur Laufstreifenperipherie reichen oder in einem Abstand vor der Peripherie enden, sodass der Laufstreifenoberteil eine durchgehende, die Spitzen der fingerartigen Fortsätze aus der Basisschicht bedeckende Außenschicht bildet. Eine ähnliche Ausführung eines Laufstreifens mit fingerartig ineinander greifenden und von einer breiteren Basis spitz zusammenlaufenden Fortsätzen ist aus der JP-A-2003 104 009 bekannt.

Ein Fahrzeugluftreifen mit einem geschichteten Laufstreifen ist beispielsweise aus der DE-A-36 10 662 bekannt. Die Schichten des Laufstreifens verlaufen in Querrichtung und sind derart ausgeführt bzw. angeordnet, dass sie spätestens nach kurzer Laufzeit des Reifens in die aktive Lauffläche gelangen, sodass sich in der Lauffläche Streifen mit unterschiedlicher Griffigkeit ergeben. Dabei sollen die Schichten durch unterschiedlichen Abrieb an der Lauffläche kleine Auswaschungen entstehen lassen, sodass derart gebildete Kanten an den Schichtgrenzen wirksam werden können.

Bei dem aus der DE-A-100 14 892 bekannten Fahrzeugluftreifen ist der Laufstreifen zumindest im Bereich der Profilblöcke aus Schichten aus zumindest zwei Laufstreifenmischungen mit unterschiedlichem Abriebswiderstand aufgebaut. Die Schichten weisen eine Schichtdicke von weniger als 1 mm auf und sind lamellenartig nebeneinander und alternierend angeordnet und miteinander vulkanisiert. Die Grenzflächen der Schichten sollen im Wesentlichen der Profilkontur folgen. Damit soll ein Reifen zur Verfügung gestellt werden, dessen Wintereigenschaften bei durch in Fahrbetrieb abnehmender Profiltiefe nicht oder weniger stark beeinträchtigt werden als bei bekannten Fahrzeugluftreifen.

Der aus der DE-C-197 18 701 bekannte Fahrzeugluftreifen weist einen Laufstreifen mit in Reifenquerrichtung zumindest zwei Zonen auf, deren Trennflächen in die Laufstreifenoberfläche münden. Die eine Laufstreifenzone weist im vulkanisierten Zustand eine höhere Härte auf als die andere. Die Zonen werden durch zumindest einen Materialstreifen aus Kautschuk gebildet, der in im Wesentlichen aneinanderliegenden, in Reifenumfangsrichtung verlaufenden Windungen gewickelt ist. Ein derart ausgeführter Fahrzeugluftreifen soll eine besonders gute Haftung zur Fahrbahnoberfläche aufweisen.

Der Erfindung liegt die Aufgabe zu Grunde, bei einem Reifen der eingangs genannten Art die Schichtung im Laufstreifen derart auszuführen, dass durch Auswahl der verwendeten Gummimischungen wahlweise ein Reifen zur Verfügung gestellt wird, der entweder eine gute Winter- oder eine gute Sommereignung aufweist.

Gelöst wird die gestellte Aufgabe erfindungsgemäß dadurch, dass die beiden Gummimischungen zumindest im Wesentlichen übereinstimmende Abriebseigenschaften aufweisen, und dass die fingerartigen Fortsätze eine konstante Querschnittsdicke von 1,5 mm bis 4 mm und parallele Flanken aufweisen.

Weist der Oberteil gemäß einer bevorzugten Ausführungsform der Erfindung eine geringere Härte als der Unterteil auf, kann eine besonders gute Wintereignung des Reifens erzielt werden. Weist der Oberteil gemäß einer weiteren Ausführungsvariante der Erfindung eine größere Härte als der Unterteil auf, kann eine besonders gute Sommereignung erzielt werden.

Erfindungsgemäß ausgeführte Laufstreifen weisen einen Abschnitt mit einem besonderen schichtweisen Aufbau auf, welcher es gestattet, den Laufstreifen entweder für einen Einsatz unter winterlichen oder unter sommerlichen Fahrbedingungen zu optimieren. Bei einer Auslegung als Winterlaufstreifen lässt sich der Zielkonflikt zwischen guten Handlingeigenschaften auf trockenen und guten Handlingeigenschaften auf winterlichen und nassen Fahrbahnen lösen. Bei einer Auslegung als Sommerlaufstreifen ist vor Allem die erzielbare, über die Lebensdauer des Laufstreifens zumindest im Wesentlichen gleichbleibende Steifigkeit des Laufstreifens von besonderem Vorteil.

Von besonderem Vorteil für eine Optimierung der erwähnten Eigenschaften ist es, wenn, bei einer Auslegung des Fahrzeugluftreifens für den Einsatz unter winterlichen Fahrbedingungen, die Gummimischung des Oberteils eine Härte zwischen 41 ShA und 65 ShA und die Gummimischung des Unterteils eine Härte zwischen 49 ShA und 76 ShA aufweist. Bei einer Auslegung des Fahrzeugluftreifens für einen Einsatz unter sommerlichen Fahrbedingungen ist eine Eigenschaftsoptimierung dann erzielbar, wenn die Gummimischung des Oberteils eine Härte zwischen 50 ShA und 76 ShA und die Gummimischung des Unterteils eine Härte zwischen 41 ShA und 65 ShA aufweist.

Erfindungsgemäß weisen die Gummimischungen des Unterteils und des Oberteils zumindest im Wesentlichen übereinstimmende Abriebseigenschaften auf. In diesem Zusammenhang ist es von Vorteil, wenn die fingerartigen Fortsätze in Umfangsrichtung verlaufende Schichten bilden.

Die jeweiligen Abmessungen der fingerartigen Fortsätze, der Grundschicht und der Außenschicht werden entsprechend der erwünschten Eigenschaften bzw. deren Schwerpunktsetzung gewählt. Von Vorteil ist es, wenn die Grundschicht und die Außenschicht jeweils eine Dicke von 1 mm bis 3 mm aufweisen.

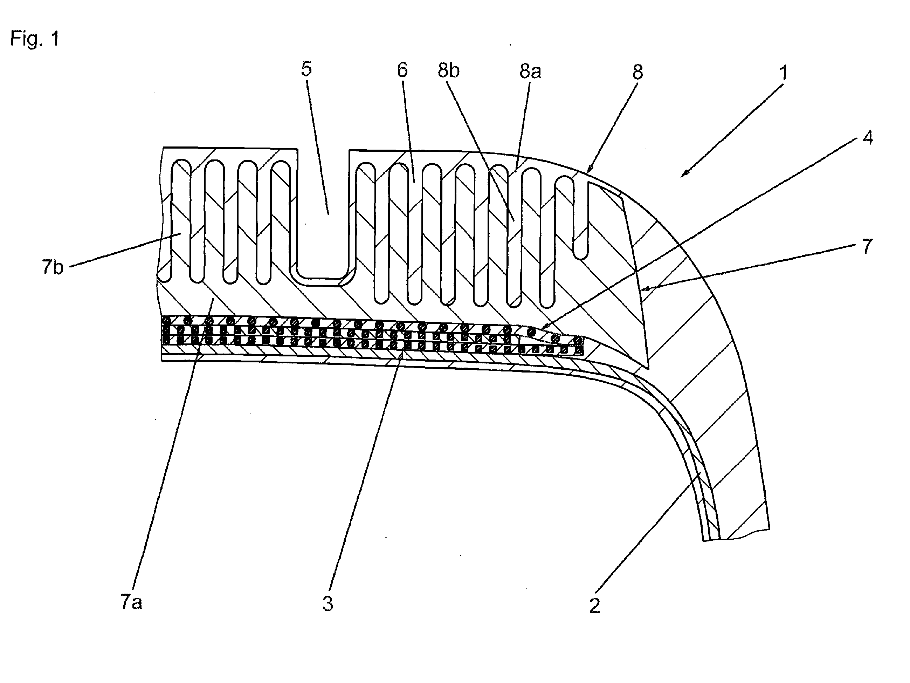

Weitere Merkmale, Vorteile und Einzelheiten der Erfindung werden anhand der Zeichnung, die schematisch ein Ausführungsbeispiel der Erfindung darstellt, näher beschrieben. Dabei zeigt
die einzige Zeichnungsfigur, Fig. 1, einen radialen Teilschnitt durch den Laufstreifenbereich eines Fahrzeugluftreifens.

Von den Bauteilen eines Fahrzeugluftreifens sind in Fig. 1 ein Laufstreifen 1, eine Karkasseinlage 2 und ein Gürtelverband 3, welcher als radial äußerste Lage eine Bandagenlage 4 aufweist, dargestellt. Der sonstige Aufbau des Reifens kann ebenfalls dem eines herkömmlichen PKW-Reifens entsprechen.

Der Laufstreifen 1 weist zumindest eine, insbesondere mehrere, in Umfangsrichtung umlaufende Umfangsnut(en) 5 auf, welche in Umfangsrichtung umlaufende Profilelemente 6 voneinander trennt bzw. trennen. Die Profilelemente 6 können Blöcke oder in Umfangsrichtung umlaufende Rippen sein.

Der Laufstreifen 1 weist ferner einen Unterteil 7 und einen Oberteil 8 auf, welche aus unterschiedlichen Gummimischungen bestehen und auf besondere Weise in radialer Richtung geschichtet sind. Zwischen dem Unterteil 7 und dem Gürtelverband 3 kann eine nicht gezeigte, übliche Basisschicht aus einer dritten Gummimischung eingebracht sein. Der Unterteil 7 besteht aus einer auf dem Gürtelverband 3 befindlichen durchgehenden Grundschicht 7a und von dieser in radialer Richtung fingerartig zur Laufstreifenperipherie weisenden Fortsätzen 7b. Der Oberteil 8 besteht aus einer die Laufstreifenaußenseite bedeckenden Außenschicht 8a und fingerartigen Fortsätzen 8b, die in radialer Richtung verlaufend die Zwischenräume zwischen den fingerartigen Fortsätzen 7b ausfüllen. Die Fortsätze 7a, 7b bewirken eine Schichtung des Laufstreifens 1 zwischen der Grundschicht 7a und der Außenschicht 8a mit in Umfangsrichtung angeordneten Schichten. Die Dicke der Grundschicht 7a und der Außenschicht 8a beträgt zwischen 1 mm und 3 mm. Die im Querschnitt fingerartigen Fortsätze 7b, 8b weisen eine Querschnittsdicke von 1,5 mm bis 4 mm auf. Da die fingerartigen Fortsätze 7b, 8b relativ schmal sind, sind in den Profilelementen 6 jeweils mehrere fingerartige Fortsätze 7b, 8b vorhanden.

Der Unterteil 7 und der Oberteil 8 bestehen aus Gummimischungen, welche unterschiedliche Härten aufweisen, wobei die Abriebsperformances bzw. die Abriebseigenschaften beider Mischungen zumindest im Wesentlichen übereinstimmen.

Ist ein erfindungsgemäß ausgeführter Fahrzeugluftreifen für einen Einsatz unter sommerlichen Fahrbedingungen vorgesehen, besteht der Oberteil 8 aus einer Gummimischung, deren Härte ShA zwischen 50 ShA und 76 ShA beträgt und größer ist als die Härte ShA (jeweils ermittelt gemäß DIN 53505) der Gummimischung des Unterteils 7, welche zwischen 41 ShA und 65 ShA beträgt. Bei einem konkreten Anwendungsbeispiel weisen der Oberteil 8 eine Härte von 61 ShA und der Unterteil 7 eine Härte von 57 ShA auf.

Ist ein erfindungsgemäß ausgeführter Fahrzeugluftreifen vorrangig für einen Einsatz unter winterlichen Fahrbedingungen, beispielsweise auf schneeigem oder eisigem Untergrund, vorgesehen, besteht der Oberteil 8 aus einer Gummimischung mit einer geringeren Härte ShA als jene des Unterteils 7, wobei die Härte des Oberteils 8 zwischen 41 ShA und 65 ShA und die Härte des Unterteils 7 zwischen 49 ShA und 76 ShA beträgt. Gemäß einem konkreten Ausführungsbeispiel weist der Oberteil 8 eine Härte von 55 ShA und der Unterteil 7 eine Härte von 65 ShA auf.

Die entsprechende Einstellung der Härte der Gummimischungen kann auf übliche Weise erfolgen, insbesondere über den Anteil an Ölen, Weichmachern und Füllstoffen in den Ausgangskautschukmischungen. Dabei gilt, dass ein höherer Anteil an Ölen und Weichmachern und ein geringerer Anteil an Füllstoffen, beispielsweise Ruß oder Silika, eine weichere Mischung ergibt.

Um die Abriebsperformance für den Oberteil 8 und den Unterteil 7 gleich oder zumindest im Wesentlichen gleich einzustellen, kann ebenfalls auf bekannte und übliche Maßnahmen zurückgegriffen werden. Insbesondere wird über den Ölanteil und den Anteil an Füllstoffen sowie die verwendeten Polymertypen und Vernetzungssysteme eine entsprechende Einstellung der Abriebseigenschaften durchgeführt.

Bei einem erfindungsgemäß ausgeführten Reifen, welcher vor Allem für den Einsatz unter winterlichen Fahrbedingungen vorgesehen ist, ist demnach der Oberteil 8 weich, der Unterteil 7 hingegen hart. Durch den erfindungsgemäßen schichtweisen Aufbau des Laufstreifens 1 lassen sich derart die Fahreigenschaften des Reifens auf winterlichen, nassen und trockenen Fahrbahnen gleichermaßen optimieren. Die erzielbare Verbesserung ist bei Neureifen besonders ausgeprägt, da der Oberteil 8 aus der weichen Mischung noch nicht abgefahren ist.

Für einen Einsatz eines erfindungsgemäß ausgeführten Reifens unter sommerlichen Fahrbedingungen stehen die Handlingeigenschaften auf trockenem Untergrund und der Fahrkomfort im Vordergrund. Bei herkömmlich ausgeführten Laufstreifen ohne Mischungsschichtung ist bei höherer Profiltiefe die Steifigkeit des Laufstreifens etwas geringer, daher ist der Komfort etwas schlechter, bei niedrigerer Profiltiefe und damit einhergehender höherer Steifigkeit verbessert sich das Handling auf trockenen Fahrbahnen. Durch die Verwendung einer härteren Mischung im Oberteil 8 und einer weicheren Mischung im Unterteil 7 bleibt infolge der Schichtung über die gesamte Lebensdauer des Laufstreifens seine Steifigkeit weitgehend konstant.

Die fingerartigen Fortsätze 7b, 8b können, wie dargestellt, an ihren Enden abgerundet sein, wobei auch eine eckige Ausführung der Enden möglich ist.

Erfindungsgemäß ausgeführte Laufstreifen lassen sich beispielsweise durch Extrusion von Mischungsprofilen und durch Zusammenfügen der Profile oder durch gemeinsame Extrusion mit einem Mehrfachextruder herstellen.

### Bezugszeichenliste

- 1: Laufstreifen
- 2: Karkasseinlage
- 3: Gürtel
- 4: Bandage
- 5: Umfangsnut
- 6: Profilelemente
- 7: Unterteil
- 7a: Grundschicht
- 7b: fingerartiger Fortsatz
- 8: Oberteil
- 8a: Außenschicht
- 8b: fingerartiger Fortsatz

## Patentansprüche

1. Fahrzeugluftreifen in Radialbauart mit einem Gürtelverband (3) und einem profilierten Laufstreifen (1) mit Profilelementen (6), wie Profilblöcken oder Rippen, welcher Laufstreifen (1) in radialer Richtung verlaufende Schichten (7b, 8b) aufweist, welche abwechselnd aus zwei Gummimischungen unterschiedlicher Härte bestehen und von einer Vielzahl fingerartig ineinander greifender Fortsätze (7b, 8b) gebildet sind, welche von einer Grundschicht (7a) eines Laufstreifen-Unterteils (7) in Richtung Laufstreifenperipherie und von einer Außenschicht (8a) eines Laufstreifen-Oberteils (8) in Richtung Gürteilverband verlaufen,
**dadurch gekennzeichnet,**
**dass** die beiden Gummimischungen zumindest im Wesentlichen übereinstimmende Abriebseigenschaften aufweisen, und dass die fingerartigen Fortsätze (7b, 8b) eine konstante Querschnittsdicke von 1,5 mm bis 4 mm und parallele Flanken aufweisen.

2. Fahrzeugluftreifen nach Anspruch 1, **dadurch gekennzeichnet, dass** die Gummimischung des Oberteils (8) eine geringe Härte ShA aufweist als die Gummimischung des Unterteils (7).

3. Fahrzeugluftreifen nach Anspruch 1 oder 2, **dadurch gekennzeichnet, dass** die Gummimischung des Oberteils (8) eine Härte zwischen 41 ShA und 65 ShA und die Gummimischung des Unterteils (7) eine Härte zwischen 49 ShA und 76 ShA aufweist.

4. Fahrzeugluftreifen nach Anspruch 1, **dadurch gekennzeichnet, dass** die Gummimischung des Oberteils (8) eine größere Härte ShA aufweist als die Gummimischung des Unterteils (7).

5. Fahrzeugluftreifen nach Anspruch 1 oder 4, **dadurch gekennzeichnet, dass** die Gummimischung des Oberteils (8) eine Härte zwischen 50 ShA und 76 ShA und die Gummimischung des Unterteils (7) eine Härte zwischen 41 ShA und 65 ShA aufweist.

6. Fahrzeugluftreifen nach einem der Ansprüche 1 bis 5, **dadurch gekennzeichnet, dass** die fingerartigen Fortsätze (7b, 8b) in Umfangsrichtung verlaufende Schichten bilden.

7. Fahrzeugluftreifen nach einem der Ansprüche 1 bis 6, **dadurch gekennzeichnet, dass** die Grundschicht (7a) und die Außenschicht (8b) jeweils eine Dicke von 1 mm bis 3 mm aufweisen.

## Claims

1. Pneumatic vehicle tyre of a radial type of construction, with a breaker belt assembly (3) and a profiled tread rubber (1) with profile elements (6), such as profile blocks or ribs, which tread rubber (1) has layers (7b, 8b) which run in the radial direction and alternately consist of two rubber compounds of different hardnesses and are formed by a multiplicity of continuations (7b, 8b) which engage in one another in the manner of fingers and run from a base layer (7a) of a tread rubber lower part (7) in the direction of the tread rubber periphery and from an outer layer (8a) of a tread rubber upper part (8) in the direction of the breaker belt assembly, **characterized in that** the two rubber compounds have substantially the same abrasion properties, and **in that** the finger-like continuations (7b, 8b) have a constant cross-sectional thickness of from 1.5 mm to 4 mm and parallel flanks.

2. Pneumatic vehicle tyre according to Claim 1, **characterized in that** the rubber compound of the upper part (8) has a lower ShA hardness than the rubber compound of the lower part (7).

3. Pneumatic vehicle tyre according to Claim 1 or 2, **characterized in that** the rubber compound of the upper part (8) has a hardness of between 41 ShA and 65 ShA and the rubber compound of the lower part (7) has a hardness of between 49 ShA and 76 ShA.

4. Pneumatic vehicle tyre according to Claim 1, **characterized in that** the rubber compound of the upper part (8) has a greater ShA hardness than the rubber compound of the lower part (7).

5. Pneumatic vehicle tyre according to Claim 1 or 4, **characterized in that** the rubber compound of the upper part (8) has a hardness of between 50 ShA and 76 ShA and the rubber compound of the lower part (7) has a hardness of between 41 ShA and 65 ShA.

6. Pneumatic vehicle tyre according to one of Claims 1 to 5, **characterized in that** the finger-like continuations (7b, 8b) form layers running in the circumferential direction.

7. Pneumatic vehicle tyre according to one of Claims 1 to 6, **characterized in that** the base layer (7a) and the outer layer (8b) respectively have a thickness of from 1 mm to 3 mm.

## Revendications

1. Bandage pneumatique à structure radiale pour roue de véhicule, présentant un ensemble de ceinture (3) et une bande de roulement (1) profilée dotée d'éléments profilés (6), par exemple des blocs profilés ou des nervures, la bande de roulement (1) présentant des couches (7b, 8b) qui s'étendent dans la direction radiale et qui sont constituées en alternance de deux mélanges de caoutchouc de duretés différentes et qui sont formées de plusieurs appendices (7b, 8b) qui s'engagent les uns dans les autres à la manière de doigts et qui partent d'une couche de base (7a) d'une partie inférieure (7) de la bande de roulement en direction de la périphérie de la bande de roulement et d'une couche extérieure (8a) d'une partie supérieure (8) de la bande de roulement en direction de l'ensemble de ceinture,
**caractérisé en ce que**
les propriétés d'abrasion des deux couches de caoutchouc se correspondent au moins essentiellement et
**en ce que** les appendices (7b, 8b) en forme de doigt ont une section transversale d'épaisseur constante de 1,5 mm à 4 mm et des flancs parallèles.

2. Bandage pneumatique pour roue de véhicule selon la revendication 1, **caractérisé en ce que** la dureté ShA du mélange de caoutchouc de la partie supérieure (8) est inférieure à celle du mélange de caoutchouc de la partie inférieure (7).

3. Bandage automatique pour roue de véhicule selon les revendications 1 ou 2, **caractérisé en ce que** la dureté du mélange de caoutchouc de la partie supérieure (8) est comprise entre 41 ShA et 65 ShA et **en ce que** la dureté du mélange de caoutchouc de la partie inférieure (7) est comprise entre 49 ShA et 76 ShA.

4. Bandage automatique pour roue de véhicule selon la revendication 1, **caractérisé en ce que** la dureté ShA du mélange de caoutchouc de la partie supérieure (8) est supérieure à celle du mélange de caoutchouc de la partie inférieure (7).

5. Bandage automatique pour roue de véhicule selon les revendications 1 ou 4, **caractérisé en ce que** la dureté du mélange de caoutchouc de la partie supérieure (8) est comprise entre 50 ShA et 76 ShA et **en ce que** la dureté du mélange de caoutchouc de la partie inférieure (7) est comprise entre 41 ShA et 65 ShA.

6. Bandage automatique pour roue de véhicule selon l'une des revendications 1 à 5, **caractérisé en ce que** les appendices (7b, 8b) en forme de doigt forment des couches qui s'étendent dans le sens de la périphérie.

7. Bandage automatique pour roue de véhicule selon l'une des revendications 1 à 6, **caractérisé en ce que** la couche de base (7a) et la couche extérieure (8b) ont chacune une épaisseur comprise entre 1 mm et 3 mm.
